Europäisches Patentamt

European Patent Office

Office européen des brevets

(19)

(11) Veröffentlichungsnummer: **0 049 741**

A1

# (12) EUROPÄISCHE PATENTANMELDUNG

(21) Anmeldenummer: 81105721.5

(22) Anmeldetag: 21.07.81

(51) Int. Cl.³: **F 16 F 9/10**
F 16 F 9/54, F 16 F 15/04
B 62 D 33/06

(30) Priorität: 10.10.80 DE 3038271

(43) Veröffentlichungstag der Anmeldung:
21.04.82 Patentblatt 82/16

(84) Benannte Vertragsstaaten:
BE FR GB IT NL SE

(71) Anmelder: Boge GmbH
Bogestrasse 50
D-5208 Eitorf/Sieg(DE)

(72) Erfinder: Mayerböck, Wilhelm
Felix-Blass-Strasse 2
D-5483 Kirchdaun(DE)

(54) Elastisches Axiallager.

(57) Ein elastisches Axiallager, insbesondere zur Lagerung von Konstruktionselementen, wie Zugstreben oder Fahrerhäusern von Kraftfahrzeugen, weist, vorzugsweise zwei, hohle, flüssigkeitsgefüllte Ringe (3) aus elastomerem Material auf, die zwischen Scheiben (10) konzentrisch um eine Buchse (5) eingespannt sind und ein Tragelement (1) zwischen sich einschließen.

Um zu ermöglichen, daß das Axiallager bei kardanischer Einleitung der Last weich einfedert, bei Zunahme der Belastung jedoch gleichzeitig eine progressive Verhärtung des Axiallagers erfolgt und durch einfachen Aufbau eine rationelle Großserienfertigung stattfinden kann, durchsetzt die Buchse (5) mit Spiel eine Öffnung (2) im Tragelement (1) und wird durch einen zur Längsachse der Buchse (5) gerichteten Ringwulst (3a) an wenigstens einem hohlen, flüssigkeitsgefüllten Ring (3) aus elastomerem Material in der Öffnung (2) zentriert und auf Abstand zu jedem hohlen, flüssigkeitsgefüllten Ring (3) gehalten.

Fig. 1

EP 0 049 741 A1

- 1 -

Elastisches Axiallager

Die Erfindung bezieht sich auf ein elastisches
Axiallager, insbesondere zur Lagerung von Konstruktionselementen, wie Zugstreben oder Fahrerhäusern von Kraftfahrzeugen, mit, vorzugsweise
zwei, hohlen, flüssigkeitsgefüllten Ringen aus
elastomerem Material, die zwischen Scheiben konzentrisch um eine Buchse eingespannt sind und ein
Tragelement zwischen sich einschließen.

Aus der US-PS 25 40 13o ist ein Lager der vorstehend
beschriebenen Gattung bekannt, das in axialer Richtung belastbar ist und hierbei auch eine kardanische
Auslenkung erlaubt. Die Ableitung der Belastung erfolgt durch ein Lastelement, das einen Ring aus
Gummi zweiteilt, dessen durch Drosselkanäle miteinander verbundene Hohlräume mit Flüssigkeit gefüllt
sind. Die Hohlräume sind stirnseitig durch aufvulkanisierte Metallscheiben verschlossen. Das bekannte Lager hat den Nachteil einer sofortigen unerwünscht stark progressiven Verhärtung bei kardanischer Auslenkung unter Belastung. Zum Füllen
der Hohlräume mit Flüssigkeit muß in nachteiliger
Weise an mindestens einer Stirnseite eine verschließ-

.../2

bare Bohrung vorgesehen werden. Ein besonders wesentlicher Nachteil des bekannten Lagers liegt darin, daß bei axialer Belastung jeweils eine Gummi-Stirnplatten-Verbindung auf Zug beansprucht wird. Dies führt bei Dauerbelastung zum Abreißen.

Auch aus der DE-OS 23 o9 276 ist ein elastisches Axiallager mit einem hohlen elastischen Ring bekannt, der jedoch nicht mit Flüssigkeit, sondern mit Gas gefüllt ist. Die Zusammendrückbarkeit der Gasfüllung unter Last bewirkt bei kardanischer Auslenkung einen metallischen Anschlag des Lastelements an das Tragelement. Dadurch werden in nachteiliger Weise Geräusche übertragen. Durch die Gasfüllung des Ringes kann außerdem die tatsächlich gewünschte Progression der Verhärtung des Lagers bei Zunahme der Belastung nicht erreicht werden.

Der Erfindung liegt die Aufgabe zugrunde, ein elastisches Lager der eingangs genannten Gattung zu schaffen, das die Nachteile der bekannten Lager vermeidet und insbesondere bei kardanischer Einleitung der Last weich einfedert. Bei Zunahme der Belastung soll jedoch gleichzeitig eine progressive Verhärtung des Lagers erfolgen. Ein einfacher Aufbau soll eine rationelle Großserienfertigung ermöglichen.

Diese Aufgabe wird erfindungsgemäß dadurch gelöst, daß die Buchse mit Spiel eine Öffnung im Tragelement durchsetzt und durch einen zur Längsachse der Buchse gerichteten Ringwulst an wenigstens einem hohlen, flüssigkeitsgefüllten Ring aus elastomerem Material in der Öffnung zentriert und auf Abstand

./3

zu jedem hohlen, flüssigkeitsgefüllten Ring gehalten wird.

Eine derartige Ausführung des Lagers ermöglicht eine praktisch beliebige gewünschte Gestaltung des Anstiegs der Progressivität der Lagerverhärtung durch entsprechende Bemessung der Ringwülste, welche den Abstand der Innenseiten des oder der Ringe zu der Buchse bestimmen. Nachdem zunächst eine große freie Oberfläche des oder der Ringe aus elastomerem Material vorhanden ist, wird diese auf einfache Weise dadurch bei zunehmender Belastung verringert, daß sich die Innenwände gegen die Oberfläche der Buchse zunehmend mehr anlegen.

Ein zu weiches Einfedern zu Beginn der Belastung wird vorteilhaft dadurch verhindert, daß mit der zum Tragelement gerichteten Seite mindestens eines hohlen, flüssigkeitsgefüllten Ringes aus elastomerem Material ein erster Metallring haftend verbunden ist.

In einer vorteilhaften, besonders für die Großserienfertigung geeigneten Ausführung weist wenigstens ein hohler, flüssigkeitsgefüllter Ring aus elastomerem Material an seinem äußeren Umfang eine radiale Teilungsfuge auf, wobei an einer diese begrenzenden, dem ersten Metallring gegenüberliegenden umlaufenden Lippe ein zweiter Metallring angehaftet ist, derart, daß bei geschlossener Teilungsfuge beide Metallringe unter Zwischenlage einer elastomeren Schicht mittels eines Bördelringes oder dergleichen flüssigkeitsdicht miteinander verspannbar sind. Ein derartig ausgebildeter Ring kann, nachdem er vollständig in die Flüssigkeit eingetaucht worden ist, mit der sein Hohlraum gefüllt werden soll, leicht und sicher dicht verschlossen werden.

- 4 -

Eine besonders einfache Fertigung wird dadurch ermöglicht, daß eine Abbiegung am zweiten Metallring an wenigstens einem hohlen, flüssigkeitsgefüllten Ring aus elastomerem Material um den ersten Metallring biegbar ist. Bei dieser Ausführung kann ein zusätzlicher Bördelring entfallen, da der umgebogene Abschnitt des zweiten Metallringes in diesem Fall direkt um den ersten Metallring gebördelt wird, wodurch ein zusätzliches Bauteil entbehrlich wird.

Ein stärker progressiver Anstieg der Verhärtung des Lagers bei stark zunehmender Belastung wird auf vorteilhafte Weise dadurch erreicht, daß der erste Metallring über den äußeren radialen Umfang des hohlen, flüssigkeitsgefüllten Ringes aus elastomerem Material hinausragt und in Richtung auf dessen äußeren Umfang, vorzugsweise mit nach außen zunehmendem Abstand zu diesem, umgebogen ist. Je nach dem Abstand der Umbiegung gegenüber dem äußeren Umfang des Ringes aus elastomerem Material wird dessen freie Oberfläche bei Zunahme der Belastung früher oder später entsprechend verkleinert, wodurch der Anstieg der Lagerhärte in gewünschter Weise beeinflußt wird.

Im Regelfall wird das erfindungsgemäße elastische Axiallager symmetrisch zu dem Tragelement ausgebildet sein. Es liegt jedoch im Rahmen der Erfindung, einen der beiden Ringe aus elastomerem Material anders, z.B. größer auszubilden oder durch entsprechende Ausgestaltung den Verlauf der Federkennlinie anders zu beeinflussen. Dies könnte beispielsweise der Fall sein, wenn die Belastung

./5

aus einer Richtung ständig größer ist als aus der entgegengesetzten. Auch ein Lager mit nur einem Ring aus elastomerem Material ist in manchen Fällen vorteilhaft.

Die Erfindung wird nachstehend anhand von in der Zeichnung schematisch dargestellten Ausführungsbeispielen näher erläutert. Es zeigen:

Figur 1 ein erfindungsgemäßes elastisches Axiallager im axialen Längsschnitt und

Figur 2 eine für die Serienfertigung vorteilhafte Ausführungsform des hohlen, flüssigkeitsgefüllten Ringes, ebenfalls im axialen Längsschnitt.

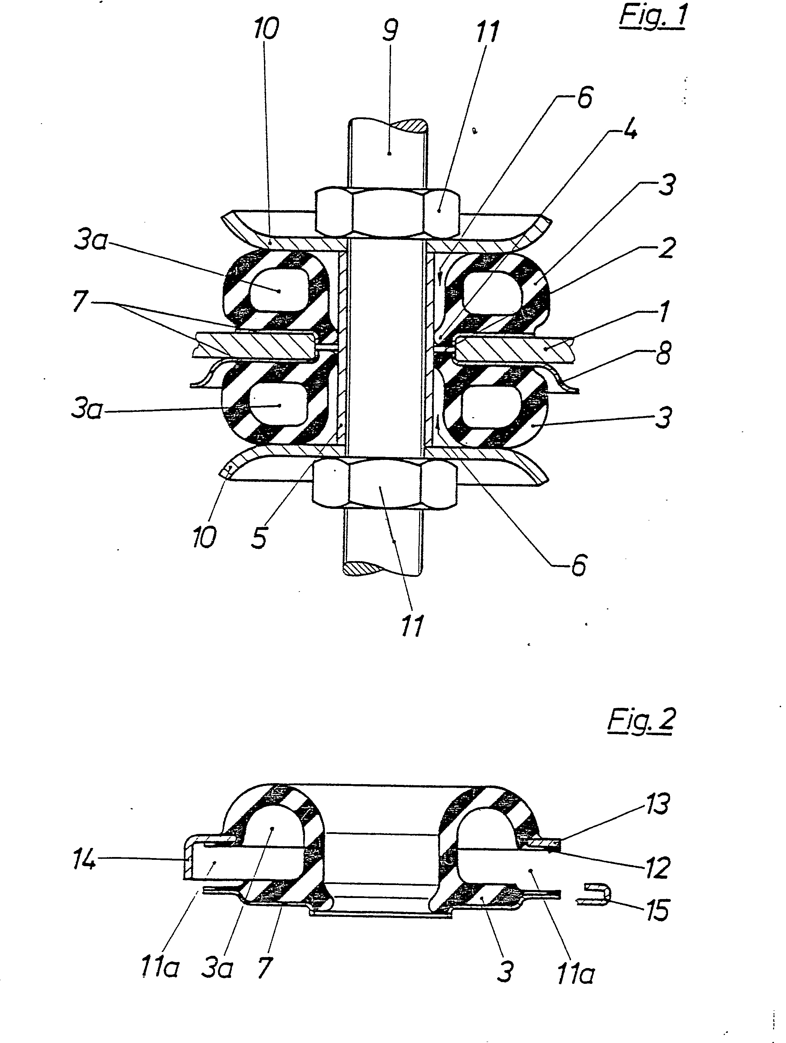

In Figur 1 ist ein Tragelement 1 angedeutet, welches eine Öffnung 2 aufweist. Je ein Ring 3 aus Gummi mit einem flüssigkeitsgefüllten Hohlraum 3a liegt von beiden Seiten gegen das Tragelement 1 an. Jeder Ring 3 besitzt an seiner zum Tragelement 1 gerichteten Seite einen Ringwulst 4, durch den er in der Öffnung 2 zentriert wird. Gleichzeitig wird mit jedem Ringwulst 4 eine Buchse 5 in der Öffnung 2 konzentrisch gehalten, und zwar derart, daß je ein Ringraum 6 zwischen der Außenwand der Buchse 5 und der zur Drehachse gerichteten Wand jedes Ringes 3 gebildet wird. An den zum Tragelement 1 gerichteten Flächen jedes Ringes 3 ist ein erster Metallring 7 so anvulkanisiert, daß seine äußere Fläche metallisch rein ist. Der in Figur 1 unten liegende erste Metallring 7 ragt mit seinem äußeren Umfang über den äußeren Umfang des Ringes 3 hinaus und weist eine umlaufende abgerundete Aufbiegung 8 auf.

- 6 -

Ein Lastelement 9 durchsetzt die Buchse 5. Zwei
Scheiben 1o werden von zwei Muttern 11 auf dem
Lastelement 9 konzentrisch gehalten und liegen jeweils gegen eine Stirnseite der Ringe 3 an.

Die Länge der Buchse 5 ist etwas geringer als die
Höhe der beiden Ringe 3 und des Tragelementes 1,
so daß die Ringe 3 unter Vorspannung stehen. Diese Vorspannung ist erforderlich, damit bei einer
kardanischen Auslenkung des Lastelementes 9 die
Scheiben 1o über ihre gesamten Umfangsflächen an
den entsprechenden Stirnseiten der Ringe 3 anliegen.

Sowohl bei einer - vorzugsweisen - Belastung des
Lagers in axialer Richtung als auch bei kardanischer
Auslenkung des Lastelementes 9 unter Last gegenüber dem Tragelement 1 wird jeweils ein zwischen
dem Tragelement 1 und einer Scheibe 1o befindlicher Ring 3 aus Gummi zusammengedrückt. Die zunächst vorhandene große freie Oberfläche des Ringes
3 ermöglicht ein weiches Aufnehmen der Belastung.
Bei Zunahme der Belastung wird der Ringraum 6
laufend verkleinert und zusätzlich je nach dem
Abstand der eventuell vorhandenen Aufbiegung 8
von dem äußeren Umfang des Ringes 3 eine Verkleinerung der freien Gummioberfläche bewirkt.
Dadurch tritt eine gewünschte progressive Verhärtung des Lagers ein.

Die Füllung des Hohlraumes 3a mit einer Flüssigkeit gewährleistet eine weiche kardanische Auslenkung, da sie in dem Hohlraum 3a leicht von der
stärker belasteten Seite zur geringer oder gar
nicht belasteten Seite verschoben wird.

In Figur 2 ist eine für die Serienfertigung besonders vorteilhafte Ausführungsform eines Ringes 3 dargestellt. Dieser Ring 3 hat an seinem äußeren Umfang eine Teilungsfuge 11a, deren oberer Rand als Lippe 12 ausgebildet ist. An diese ist·ein zweiter Metallring 13 anvulkanisiert.. Dieser zweite Metallring 13 kann, wie in der rechten Seite der Figur 2 dargestellt, eine rechtwinklige Abbiegung 14 in Richtung des ersten Metallringes 7 aufweisen. Die Lippe 12 befindet sich zur Teilungsfuge 11a hin unter dem zweiten Metallring 13, der nach außen hin metallisch blank ist.

Zur Füllung des Hohlraumes 3a wird der Ring 3 vollständig in einen Behälter mit der einzufüllenden Flüssigkeit, vorzugsweise Wasser/Glykol im Verhältnis 1 : 1 eingetaucht. Anschließend wird der Ring 3 zusammengedrückt und damit die Teilungsfuge 11a geschlossen. Bei einer Ausführung entsprechend der rechten Seite der Figur 2 wird die Abbiegung um den äußeren Rand des ersten Metallringes 7 umgebördelt. Bei einer Ausführung des Ringes 3 entsprechend der linken Seite der Figur 2 hält ein zusätzlicher Bördelring 15 die beiden Metallringe 7 und 13 dicht zusammen. Der Ring 3 kann deshalb einwandfrei gedichtet werden, weil sich zwischen den beiden Metallringen 7 und 13 Gummi befindet, an dem ja die beiden Metallringe 7 und 13 anvulkanisiert sind und die Bördelung rein metallische Anlageflächen aufweist. Der erste Metallring 7 kann an seinem äußeren Umfang entsprechend der Dicke der Bördelung aufgekröpft sein, um über seine gesamte Fläche eine Anlage an das Tragelement 1 zu gewährleisten.

- 8 -

Wie ersichtlich, kann bei einer Ausführung des
Ringes 3 entsprechend dem in Figur 2 gezeigten Beispiel der erste Metallring 7 allenfalls eine
kleinere Aufbiegung 8 erhalten. Wenn eine progressive Lagerverhärtung bei Verwendung eines
derartigen Ringes 3 mit (geschlossener) Teilungsfuge 11a und zweitem Metallring 13 vorgesehen ist,
müßten andere bekannte Maßnahmen getroffen werden,
beispielsweise Einbau eines gesonderten Anschlagringes oder entsprechende Ausbildung der Scheibe 1o.

## Bezugszeichenliste

1   Tragelement
2   Öffnung
3   Ring aus Gummi
3a  Hohlraum
4   Ringwulst
5   Buchse
6   Ringraum
7   erster Metallring
8   Aufbiegung
9   Lastelement
10  Scheiben
11  Muttern
11a Teilungsfuge
12  Lippe
13  zweiter Metallring
14  Abbiegung
15  Bördelring

## Patentansprüche

1. Elastisches Axiallager, insbesondere zur Lagerung von Konstruktionselementen, wie Zugstreben oder Fahrerhäusern von Kraftfahrzeugen, mit vorzugsweise zwei, hohlen, flüssigkeitsgefüllten Ringen aus elastomerem Material, die zwischen Scheiben konzentrisch um eine Buchse eingespannt sind und ein Tragelement zwischen sich einschließen, dadurch gekennzeichnet, daß die Buchse (5) mit Spiel eine Öffnung (2) im Tragelement (1) durchsetzt und durch einen zur Längsachse der Buchse (5) gerichteten Ringwulst (3a) an wenigstens einem hohlen, flüssigkeitsgefüllten Ring (3) aus elastomerem Material in der Öffnung (2) zentriert und auf Abstand zu jedem hohlen, flüssigkeitsgefüllten Ring (3) gehalten wird.

2. Elastisches Axiallager nach Anspruch 1, dadurch gekennzeichnet, daß mit der zum Tragelement (1) gerichteten Seite mindestens eines hohlen, flüssigkeitsgefüllten Ringes (3) aus elastomerem Material ein erster Metallring (7) haftend verbunden ist.

3. Elastisches Axiallager nach Anspruch 1 und 2, dadurch gekennzeichnet, daß wenigstens ein hohler, flüssigkeitsgefüllter Ring (3) aus elastomerem Material an seinem äußeren Umfang eine radiale Teilungsfuge (11a) aufweist, wobei an einer diese begrenzenden, dem ersten Metallring (7) gegenüberliegenden umlaufenden Lippe (12) ein zweiter Metallring (13) angehaftet ist, derart, daß bei geschlossener Teilfuge (11a) beide Metallringe (7, 13) unter Zwischenlage einer elastomeren Schicht mittels eines Bördelrings (15) oder
dergleichen flüssigkeitsdicht miteinander verspannbar sind.

4. Elastisches Axiallager nach Anspruch 1, 2 und 3,
   dadurch gekennzeichnet,
   daß eine Abbiegung (14) am zweiten Metallring (13)
   wenigstens eines hohlen, flüssigkeitsgefüllten
   Ringes (3) aus elastomerem Material um den ersten
   Metallring (7) umbiegbar ist.

5. Elastisches Axiallager nach Anspruch 1,
   dadurch gekennzeichnet,
   daß der erste Metallring (7) über den äußeren
   radialen Umfang des hohlen, flüssigkeitsgefüllten
   Ringes (3) aus elastomerem Material hinausragt
   und in Richtung auf dessen äußeren Umfang, vorzugsweise mit nach außen zunehmendem Abstand zu
   diesem, umgebogen ist.

0049741

1/1

*Fig. 1*

*Fig. 2*

**Europäisches Patentamt**

## EUROPÄISCHER RECHERCHENBERICHT

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | F 16 F 9/10 |
| D | <u>DE - A - 2 309 276</u> (VW)<br>* Insgesamt *<br><br>-- | | 9/54<br>15/04<br>B 62 D 33/06 |
| D | <u>US - A - 2 540 130</u> (LEE)<br>* Insgesamt *<br><br>-- | | |
| | <u>DE - C - 729 930</u> (RACHINGER)<br>* Seite 2, Zeile 70 - Seite 3, Zeile 70; Figuren 3-8 *<br><br>-- | 1,2,5 | **RECHERCHIERTE SACHGEBIETE (Int. Cl³)** |
| | <u>US - A - 3 906 865</u> (PAMER)<br>* Spalte 2, Zeile 20 - Spalte 3, Zeile 64; Figuren 1,2,4 *<br><br>-- | 1 | B 60 K<br>F 16 F<br>B 60 G<br>B 62 D<br>F 16 D<br>F 16 C |
| | <u>DE - A - 1 580 454</u> (AUDI NSU)<br>* Insgesamt *<br><br>-- | 1,2,5 | |
| | <u>FR - A - 853 998</u> (RENAUX)<br>* Insgesamt *<br><br>-- | 1,2 | |
| | <u>US - A - 3 756 551</u> (BISHOP)<br>* Figuren 1-3 *<br><br>-- | 1,2 | **KATEGORIE DER GENANNTEN DOKUMENTE**<br><br>X: von besonderer Bedeutung<br>A: technologischer Hintergrund<br>O: nichtschriftliche Offenbarung<br>P: Zwischenliteratur |
| | <u>FR - A - 1 597 182</u> (SIMCA)<br>* Insgesamt *<br><br>-- ./. | 1,2,5 | T: der Erfindung zugrunde<br>liegende Theorien oder<br>Grundsätze<br>E: kollidierende Anmeldung<br>D: in der Anmeldung angeführtes<br>Dokument<br>L: aus andern Gründen<br>angeführtes Dokument |

Der vorliegende Recherchenbericht wurde für alle Patentansprüche erstellt.

&: Mitglied der gleichen Patentfamilie, übereinstimmendes Dokument

| Recherchenort | Abschlußdatum der Recherche | Prüfer |
|---|---|---|
| Den Haag | 21-12-1981 | ESPEEL |

EPA form 1503.1 06.78

Europäisches
Patentamt

**EUROPÄISCHER RECHERCHENBERICHT**

| | EINSCHLÄGIGE DOKUMENTE | | KLASSIFIKATION DER ANMELDUNG (Int Cl.³) |
|---|---|---|---|
| Kategorie | Kennzeichnung des Dokuments mit Angabe. soweit erforderlich. der Maßgeblichen Teile | betrifft Anspruch | |
| A | DE - A - 2 821 493 (FICHTEL & SACHS) | 1 | |
| A | DE - A - 2 803 743 (GENERAL ELEC- TRIC) | 1 | |
| A | DE - A - 2 121 677 (CONTINENTAL GUMMI) | 1 | |
| A | FR - A - 2 268 659 (CPIO) | 1 | |
| A | FR - A - 2 102 645 (PINEAU) | 1 | |
| A | US - A - 2 524 405 (STORRS) * Figur 2 * | 1 | RECHERCHIERTE SACHGEBIETE (Int. Cl.³) |
| | ---- | | |

EPA Form 1503.2   06.78